# EUROPEAN PATENT APPLICATION

(11) **EP 3 075 645 A2**
(43) Date of publication of application: **05.10.2016**
(21) Application number: 16162934.0
(22) Date of filing: 30.03.2016
(51) Int. Cl.: B62M 11/02

(54) **DRIVE UNIT AND ELECTRIC STRADDLED VEHICLE COMPRISING THE SAME**

(30) Priority: 01.04.2015 JP 2015074802
(71) Applicant: Yamaha Hatsudoki Kabushiki Kaisha, Shizuoka-ken Shizuoka 438-8501 (JP)
(72) Inventor: Yoneda, Yuuichi, Shizuoka, Shizuoka 438-8501 (JP)
(74) Representative: Moreland, David

(57) **Abstract**

A drive unit for use in an electric straddled vehicle provides higher motor output while the size of the drive unit is kept from increasing. A drive unit (22) is used in an electric straddled vehicle (10). A drive unit (22) includes a motor (32), a first gear (34), a rotation shaft (36), a second gear (38), and bearings (48A, 48B). The motor has a rotor shaft (62). The first gear (34) is provided at the rotor shaft (62) to rotate at the same speed as the rotor shaft. The rotation shaft (36) is provided in parallel with the rotor shaft (62). The second gear (38) is provided at the rotation shaft (36) and meshes with the first gear (34). The bearings (48A,48B) support the rotation shaft (36) in a rotatable manner. The bearings (48A,48B) at least partly overlap the motor (32) when viewed in an axial direction of the rotation shaft (36).

## Description

### FIELD OF INVENTION

The present invention relates to a drive unit for use in a vehicle, e.g. a straddled vehicle, such as an electric straddled vehicle. The present invention also relates to a straddled vehicle, such as an electric straddled vehicle having a drive unit.

### BACKGROUND OF INVENTION

An electric motorcycle is an example of an electric straddled vehicle. An electric motorcycle includes a drive unit. An example of A drive unit is disclosed, for example, in International Publication No. WO 2011/080790 (SMRE Srl). This publication discloses a propulsion system for a motorcycle. The propulsion system includes a motor, a driving gear provided at a rotor shaft of the motor to rotate at the same speed as the rotor shaft, a driven shaft provided in parallel with the rotor shaft, and a driven gear provided at the driven shaft and meshing with the driving gear to rotate the driven shaft.

A motor may have an increased outer diameter in order to increase the output of the motor. Increase in the outer diameter of the motor results in an increased distance between a rotor shaft and a driven shaft. As the distance between the rotor shaft and the driven shaft increases, the driving gear and the driven gear must inevitably be increased in size in order to maintain a certain reduction gear ratio. Here, the driven gear is adapted to have a larger diameter than that of the driving gear in order to obtain a desired reduction gear ratio. Therefore, if the distance between the rotor shaft and the driven shaft increases, the size of the driven gear becomes even larger. As a result, the size of the propulsion system can also be increased.

An object of the present invention is to seek to provide higher motor output in a drive unit for use in an electric straddled vehicle while inhibiting the size of the drive unit from becoming larger.

It is an object of at least one embodiment of at least one aspect of the present invention to obviate or at least mitigate one or more problems or disadvantages in the prior art.

### SUMMARY OF INVENTION

Various aspects of the present invention are defined in the independent claims appended hereto. Some optional and/or preferred features are defined in the dependent claims appended hereto.

According to a first aspect of the present invention there is provided a drive unit, for example, for use in a vehicle, such as an electric straddled vehicle.

The drive unit may comprise a motor, which may have a rotor shaft.

The drive unit may comprise a first gear which may be provided at the rotor shaft to rotate at the same speed as the rotor shaft.

The drive unit may comprise a rotation shaft which may be provided in parallel with the rotor shaft.

The drive unit may comprise a second gear which may be provided at the rotation shaft to mesh with the first gear.

The drive unit may comprise a bearing which may support the rotation shaft in a rotatable manner.

At least a part of the bearing may overlap at least part of the motor when viewed in an axial direction of the rotation shaft.

In the drive unit of the present invention, the rotation shaft may be provided close to the rotor shaft. Therefore, the second gear can be kept from having an increased diameter while a target reduction gear ratio can be maintained. Moreover, the second gear can be kept from having an increased diameter, so that the drive unit can be prevented from increasing in size.

The motor may be an inner rotor type or outer rotor type motor. As for the inner rotor type, at least a part of the bearing may need only overlap (at least part of) the stator when viewed in the axial direction of the rotation shaft. As for the outer rotor type, at least a part of the bearing may need only overlap (at least part of) the rotor when viewed in the axial direction of the rotation shaft.

The first gear may rotate at the same speed as the rotor shaft, for example, when: (1) the first gear is fixed to the rotor shaft; or (2) the rotor shaft is provided with a clutch and the first gear is configured to rotate integrally with the rotor shaft as the clutch is engaged. More specifically, the manner in which the first gear rotates at the same speed as the rotor shaft may refer to the state in which the first gear rotates integrally with the rotor shaft. Stated differently, the manner in which the first gear rotates at the same speed as the rotor shaft may refer to the state in which the first gear does not have its speed reduced relative to the rotor shaft.

Preferably, at least a part of the rotation shaft may overlap the motor when viewed in the axial direction of the rotation shaft. In this way, the rotation shaft can be provided even closer to the rotor shaft. Therefore, increase in the diameters of the first and second gears can be avoided more easily while a target reduction gear ratio is maintained. In addition, the second gear can be prevented from increasing in diameter more easily, so that increase in the size of the drive unit can be avoided more easily.

The bearing may comprise or include a first bearing which may be provided closer to the second gear than to a stator of the motor in the axial direction.

The bearing may further comprise or include a second bearing which may be provided closer to the second gear than to the first bearing in the axial direction.

The bearing may further comprise or include a second bearing which may be provided more apart from the second gear than from the stator in the axial direction.

The drive unit as described above may further include a clutch. The clutch may allow/prevent transmission of driving force from the rotor shaft to the rotation shaft. The clutch may be provided at an end of the rotation shaft. The end may be provided more apart from the stator of the motor than from the second gear in the axial direction of the rotation shaft. The clutch may include an input portion. The input portion may be provided more apart from the stator than from the rotation shaft in the axial direction of the rotation shaft. Force provided to operate the clutch may act on the input portion.

In this case, the input portion may be provided more apart from the stator than from the rotation shaft in the axial direction of the rotation shaft. In this way, at least a part of the rotation shaft can be provided to overlap the motor when viewed in the axial direction of the rotation shaft. Therefore, increase in the diameter of the second gear can be avoided even more easily. As a result, the size of the drive unit can be prevented from increasing even more easily.

According to a second aspect of the present invention, there is provided an electric straddled vehicle comprising or including a drive unit, according to the first aspect of the present invention.

Herein, it will be understood that "apart from" may mean "separated from".

It will be appreciated that features analogous to those described in relation to the above aspects or optional features may be individually and separably or in combination applicable to any of the other aspects and optional features.

### BRIEF DESCRIPTION OF DRAWINGS

Embodiments of the present invention will now be described, by way of example only, with reference to the accompanying drawings, which are:
- **Figure 1**: a left side view of an electric motorcycle according to an embodiment of the present invention;
- **Figure 2**: a sectional view of a drive unit according to an embodiment of the present invention provided in the electric motorcycle of Figure 1;
- **Figure 3**: a view for illustrating a positional relation between a stator in a motor, a rotation shaft, and a bearing that supports the rotation shaft in a rotatable manner;
- **Figure 4**: a partly enlarged view of Figure 3; and
- **Figure 5**: a view illustrating an operation mechanism for a clutch of a drive unit according to a modified embodiment of the present invention.

### DETAILED DESCRIPTION OF THE EMBODIMENTS

An electric straddled vehicle according to an embodiment of the present invention will now be described by way of illustrative example only, in conjunction with the accompanying drawings. According to the embodiment, an electric motorcycle will be described as an example of the electric straddled vehicle. In the drawings, the same or corresponding portions are designated by the same reference numerals and their description will not be repeated.

### Overall Structure of an Electric Motorcycle

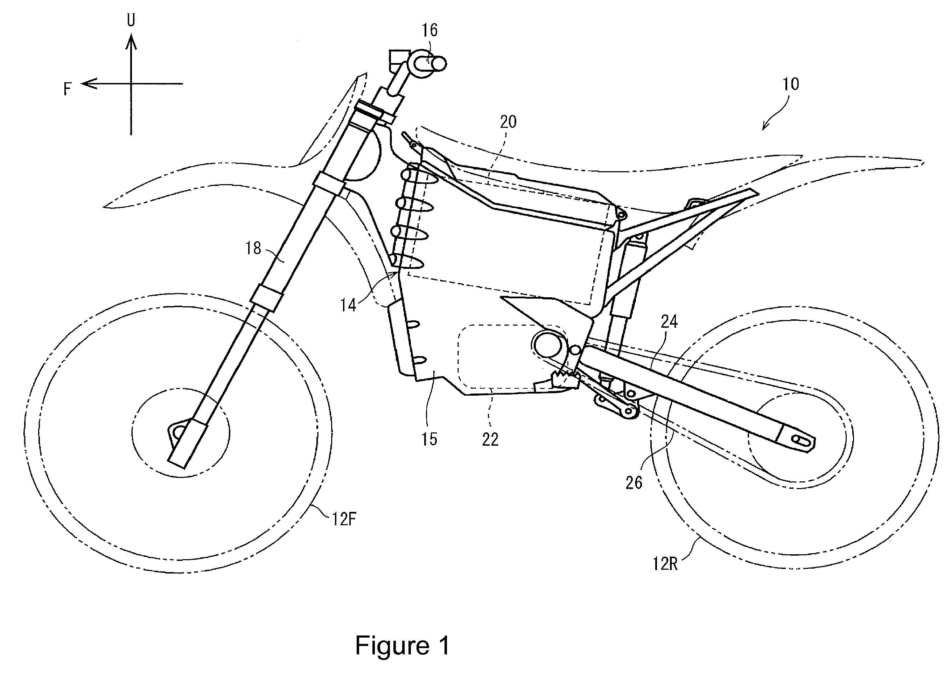

Figure 1 is a left side view of an electric motorcycle 10 according to an embodiment of the present invention. Note that the front, back, left, and right in the following description refer to these sides as viewed from a rider seated on a seat of the electric motorcycle 10. In Figure 1, the arrow F designates a forward direction of the electric motorcycle 10, and the arrow U designates an upward direction of the electric motorcycle 10.

As shown in Figure 1, the electric motorcycle 10 includes a front wheel 12F, a rear wheel 12R, a vehicle body frame 14, a handle (or handlebar) 16, a front fork 18, a battery 20, a drive unit 22, a rear arm 24, and a chain 26.

The front fork 18 supports the front wheel 12F in a rotatable manner. The direction of the front wheel 12F is changed by operating the handle 16.

The vehicle body frame 14 supports the rear (swing) arm 24 in a swingable manner. The rear arm 24 supports the rear wheel 12R in a rotatable manner.

The vehicle body frame 14 includes a housing 15. The battery 20 and the drive unit 22 are provided in the housing 15. The drive unit 22 is positioned under the battery 20 (see Figure 1).

Electric power stored by the battery 20 is supplied to the drive unit 22 through a controller that is not shown. In this way, the drive unit 22 is driven.

Motive power from the drive unit 22 is transmitted to the rear wheel 12R through the chain 26. In this way, the rear wheel 12R is rotated.

### Drive Unit

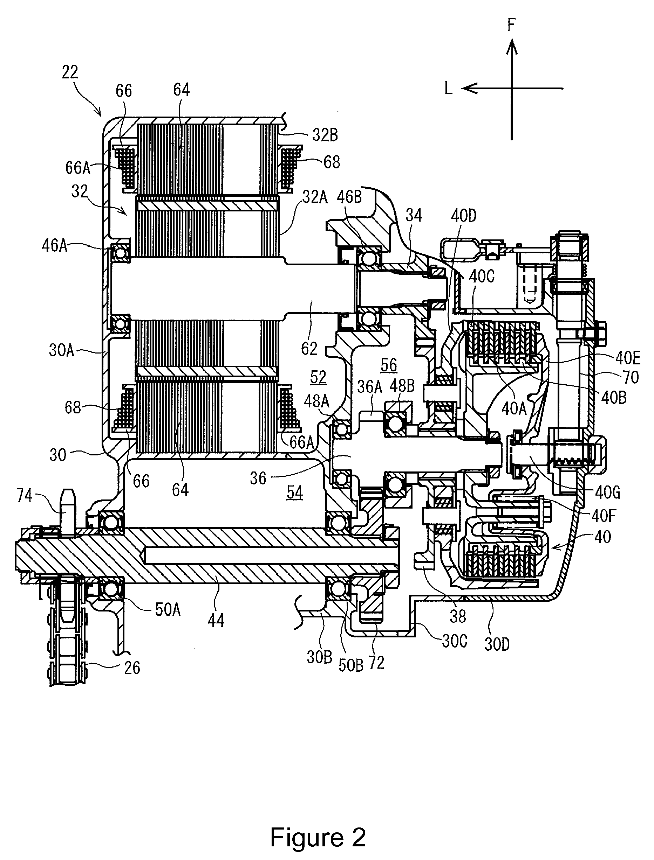

Referring to Figure 2, the drive unit 22 will be described. Figure 2 is a sectional view of the drive unit 22.

The drive unit 22 outputs motive power used to rotate the rear wheel 12R. The drive unit 22 includes a housing 30, a motor 32, a gear 34, a shaft 36, a gear 38, a clutch 40, a shaft 44, bearings 46A and 46B, bearings 48A and 48B, and bearings 50A and 50B.

The housing 30 includes a first housing 30A, a second housing 30B, a third housing 30C, and a fourth housing 30D. The first housing 30A, the second housing 30B, the third housing 30C, and the fourth housing 30D are arranged side by side in this order in a left-right direction.

The first housing 30A is assembled to the second housing 30B. Two spaces 52 and 54 are formed between the first housing 30A and the second housing 30B. The space 52 stores the motor 32. The space 54 stores a part of the shaft 44.

The third housing 30C is assembled to the second housing 30B. The third housing 30C is provided on an opposite side to the first housing 30A with respect to the second housing 30B.

The fourth housing 30D is assembled to the third housing 30C. The fourth housing 30D is provided on an opposite side to the second housing 30B with respect to the third housing 30C.

The second housing 30B, the third housing 30C, and the fourth housing 30D define a space 56. The space 56 stores the clutch 40.

The motor 32 is a three-phase induction motor. The motor 32 includes a rotor 32A and a stator 32B.

The rotor 32A includes a rotor shaft 62. The rotor shaft 62 extends in the left-right direction. The rotor shaft 62 is rotatably supported by the bearings 46A and 46B. Here, the bearing 46A is provided in the first housing 30A. The bearing 46B is provided in the second housing 30B.

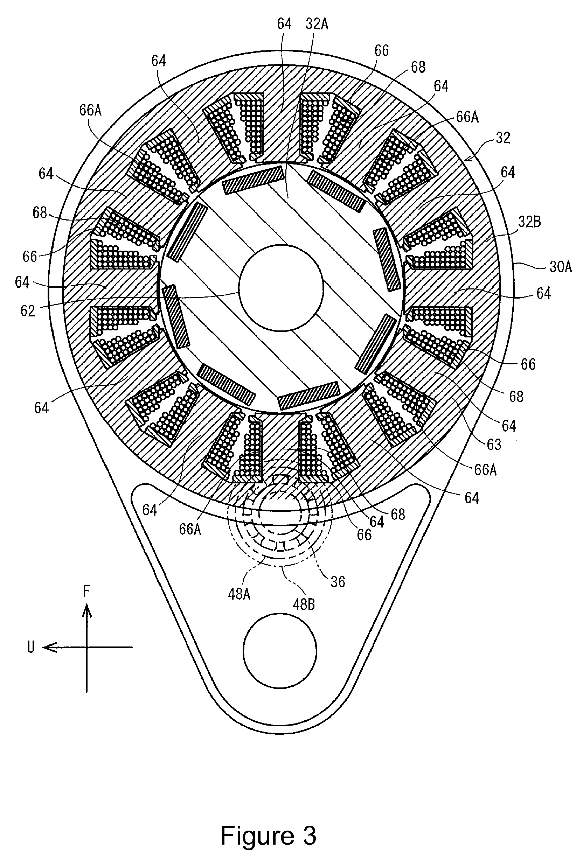

The stator 32B is provided around the rotor 32A. Referring to Figure 3, the stator 32B will be described in detail. Figure 3 is a view illustrating a positional relation among the stator 32B, the shaft 36, and the bearings 48A and 48B when viewed from the right side of the vehicle.

The stator 32B includes an annular main body 63 and a plurality (twelve 12, in this embodiment) of cores 64. The main body 63 extends continuously in a circumferential direction around the rotor shaft 62. The plurality of cores 64 each project toward the rotor shaft 62 from the inner circumferential surface of the main body 63. The plurality of cores 64 are arranged at equal intervals in the circumferential direction around the rotor shaft 62. A coil bobbin 66 is assembled to each of the cores 64. The coil bobbin 66 has a coil 68 wound therearound.

Referring back to Figure 2, the gear 34 is fixed to the rotor shaft 32A. More specifically, the gear 34 rotates integrally with the rotor shaft 32A. Sated differently, the gear 34 rotates at the same speed as the rotor shaft 32A. The gear 34 is more apart from the stator 32B than from the bearing 46B in an axial direction of the rotor shaft 32A. In other words, the gear 34 is provided in the space 56.

The shaft 36 is provided in the space 56. The shaft 36 is rotatably supported by the bearings 48A and 48B. Here, the bearing 48A is provided in the second housing 30B. The bearing 48B is provided in the third housing 30C.

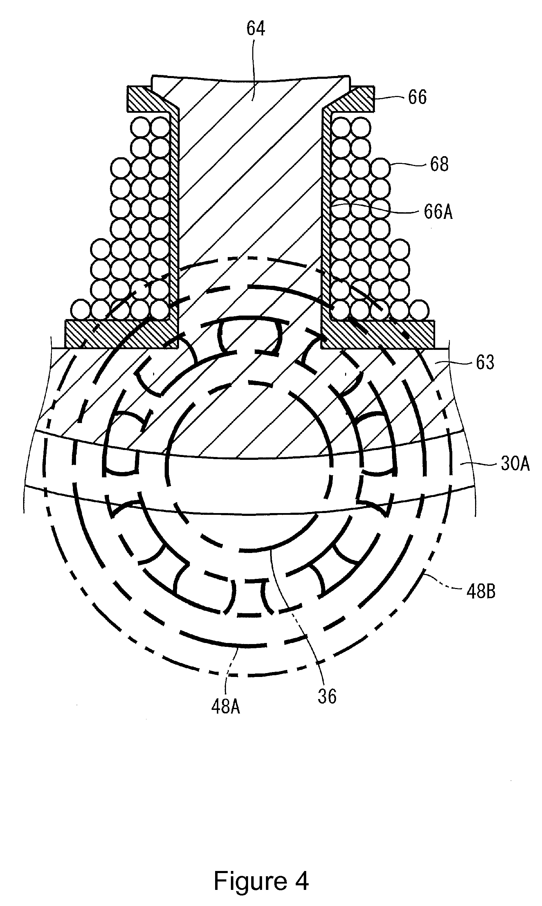

Referring to Figure 4, the positional relation between the stator 32B, the shaft 36, and the bearings 48A and 48B will be described in detail. Figure 4 is a partly enlarged view of Figure 3.

As can be seen in an axial direction of the shaft 36, a part of the shaft 36 overlaps the main body 63 of the stator 32B. As can be seen in the above-described axial direction, the bearings 48A and 48B partly overlap one of the plurality of cores 64. As can be seen in the above-described axial direction, the bearings 48A and 48B partly overlap a coil bobbin 66 assembled to the above-described core 64. As can be seen in the above-described axial direction, the bearings 48A and 48B partly overlap a part 66A of the coil bobbin 66 around which the coil 68 is wound. Here, the part 66A extends in the projecting direction of the core 64. In other words, the part 66A surrounds the core 64.

Referring back to Figure 2, the shaft 36 is provided with the gear 38. The gear 38 rotates integrally with the shaft 36 as the clutch 40 is engaged. When the clutch 40 is disengaged, the gear 38 is rotatable relative to the shaft 36. The gear 38 meshes with the gear 34. The gear 38 has a larger diameter than that of the gear 34. The gear 38 is more apart from the bearing 48A than from the bearing 48B in the axial direction of the shaft 36. The gear 38 overlaps the shaft 44 as seen in the above-described axial direction.

The shaft 36 is provided with the clutch 40. The clutch 40 is provided at an end that is positioned more apart from the bearings 48A and 48B than from the gear 38 in the axial direction of the shaft 36. The clutch 40 overlaps the bearings 46A and 46B as seen in the above-described axial direction.

The clutch 40 includes a plurality of friction plates 40A, a clutch boss 40B, a plurality of clutch plates 40C, a clutch housing 40D, a pressure plate 40E, a clutch spring 40F, and a rod 40G. The clutch boss 40B is fixed to the shaft 36 to support the plurality of friction plates 40A. The clutch housing 40D is fixed to the gear 38 to support the plurality of clutch plates 40C. The rod 40G is coupled to the pressure plate 40E and has a rack that engages with a pinion formed at a rod 70 positioned near the clutch 40. The rod 40G moves the pressure plate 40E against the energizing force of the clutch spring 40F as the rod 70 rotates. The rod 40G is more apart from the gear 38 than from the shaft 36 in the axial direction of the shaft 36. Transmission of motive power from the gear 38 to the shaft 36 is allowed/prevented in response to a position of the pressure plate 40E. According to the disclosed embodiment, an operation mechanism for the clutch 40 is implemented by including the rods 40G and 70. Note that the clutch 40 has a known structure and, therefore, will not be described in detail.

A gear 36A is fixed to the shaft 36. The gear 36A is positioned between the bearings 48A and 48B in the axial direction of the shaft 36. The gear 36A has a smaller diameter than that of the gear 38.

The shaft 44 is rotatably supported by the bearings 50A and 50B. The bearing 50A is provided in the first housing 30A. The bearing 50B is provided in the second housing 30B.

A gear 72 is fixed to the shaft 44. The gear 72 rotates integrally with the shaft 44. The gear 72 is more apart from the bearing 50A than from the bearing 50B. The gear 72 is provided in the space 56. The gear 72 meshes with the gear 36A. The gear 72 has a larger diameter than that of the gear 36A.

A sprocket 74 is fixed to the shaft 44. The sprocket 74 rotates integrally with the shaft 44. The sprocket 74 is more apart from the bearing 50B than from the bearing 50A in an axial direction of the shaft 44. The sprocket 74 is positioned outside the housing 30. The sprocket 74 has the chain 26 wound therearound.

In the electric motorcycle 10, the output of the motor 32 is increased while the drive unit 22 can be kept from increasing in size. This can be achieved for the following reasons.

The motor 32 may have an increased outer diameter for example in order to increase the output of the motor 32. When the motor 32 has an increased diameter, the distance between the rotor shaft 62 and the shaft 36 increases. The increase in the distance between the rotor shaft 62 and the shaft 36 inevitably increases the diameter of the gear 34 provided at the rotor shaft 62 and the diameter of the gear 38 provided at the shaft 36. Here, the gear 38 has a larger diameter than that of the gear 34 in order to obtain a desired reduction gear ratio. Therefore, the increase in the distance between the rotor shaft 62 and the shaft 36 results in further increase in the size of the gear 38. This could increase the size of the drive unit 22 as a result.

In the electric motorcycle 10, the bearings 48A and 48B partly overlap the stator 32B when viewed in the axial direction of the shaft 36. Therefore, the distance between the rotor shaft 62 and the shaft 36 may be shortened or reduced. This allows a target reduction gear ratio to be obtained, while the gear 38 is kept from further increasing in size. Moreover, since this can keep the gear 38 from further increasing in size, the size of the drive unit 22 can be kept from increasing.

In the electric motorcycle 10, the bearings 48A and 48B partly overlap one of the plurality of cores 64 when viewed in the axial direction of the shaft 36. Therefore, the distance between the rotor shaft 62 and the shaft 36 can be even shorter.

In the electric motorcycle 10, the bearings 48A and 48B partly overlap a coil bobbin 66 assembled to one of the plurality of cores 64 when viewed in the axial direction of the shaft 36. Therefore, the distance between the rotor shaft 62 and the shaft 36 can be even shorter.

In the electric motorcycle 10, the bearings 48A and 48B partly overlap a part 66A of the coil bobbin 66 assembled to one of the plurality of cores 64 that has the coil 68 wound therearound when viewed in the axial direction of the shaft 36. This allows the distance between the rotor shaft 62 and the shaft 36 to be even shorter.

In the electric motorcycle 10, the shaft 36 partly overlaps the main body 63 of the stator 32B when viewed in the axial direction of the shaft 36. This allows the distance of the rotor shaft 62 and the shaft 36 to be even shorter.

In the electric motorcycle 10, the shaft 36 partly overlaps the main body 63 of the stator 32B when viewed in the axial direction of the shaft 36. This allows the length of the shaft 36 to be shortened. The weight of the shaft 36 can be reduced as a result. More specifically, the drive unit 22 can have a reduced weight.

In the electric motorcycle 10, since the drive unit 22 includes the clutch 40, transmission of driving force from the motor 32 to the shaft 44 can be allowed/prevented. Therefore, transmission of driving force from the motor 32 to the shaft 44 can be allowed/prevented based on the rider's intention. As a result, the vehicle can abruptly be switched from a state in which driving force from the motor 32 is not transmitted to the shaft 44 to a state in which the driving force is transmitted for example when the electric motorcycle 10 starts, so that a manoeuvre in which the front wheel of the motorcycle comes off from the ground while riding (or wheelie) can easily be achieved. More specifically, in the electric motorcycle 10, the performance of the electric motorcycle 10 improves since the drive unit 22 includes the clutch 40.

In the electric motorcycle 10, the clutch 40 includes the rod 40G. The rod 40G is operated by rod 70. The rod 70 is more apart from the motor 32 than from the clutch 40 in the axial direction of the shaft 36. A push rod does not have to be provided through the shaft 36 in order to operate the clutch, and therefore the shaft 36 can be shortened. Therefore, the shaft 36 can be positioned to partly overlap the core 64 when viewed in the axial direction of the shaft 36. In other words, the distance between the rotor shaft 62 and the shaft 36 can be shortened.

### Applications of Operation Mechanism for Clutch

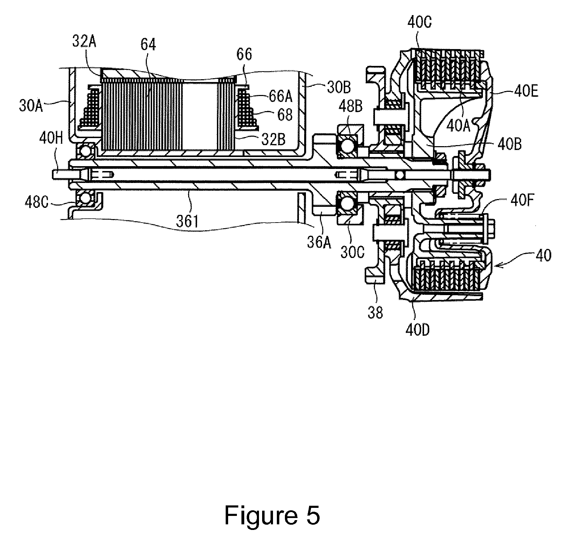

In the above-described embodiment, the rod 40G is operated by the rod 70 in order to operate the clutch 40 while the clutch 40 may be operated for example by an operation mechanism shown in Figure 5.

In the modified example shown in Figure 5, a tubular shaft 361 is provided instead of the shaft 36. The shaft 361 is rotatably supported by bearings 48B and 48C. More specifically, in the example shown in Figure 5, the bearing 48C is provided instead of the bearing 48A. The bearing 48C is supported at the first housing 30A.

In the example shown in Figure 5, a rod 40H is provided instead of the rod 40G. The rod 40H is provided through the shaft 361 and coupled to the pressure plate 40E. As the rod 40H is operated by a clutch release mechanism (not shown) disposed outside the housing 30, the clutch 40 is operated. The clutch release mechanism is, for example, a hydraulic cylinder. In the example shown in Figure 5, the operation mechanism for the clutch 40 is implemented by including the rod 40H and the clutch release mechanism (not shown).

In the example shown in Figure 5, the bearings 48B and 48C that support the shaft 361 in a rotatable manner overlap the stator 32B when viewed in an axial direction of the shaft 361. Therefore, the distance between the shaft 361 and the rotor shaft 62 can be shortened.

The embodiments of the present invention have been described but the same is only exemplary illustration of how the present invention is carried out. Therefore, the invention is not limited by the above description of the embodiments, and modifications may be made to the above-described embodiments without departing the scope of the invention.

In the above-described embodiment, the drive unit 22 includes the clutch 40, but it will be appreciated that the drive unit, for example, does not have to include the clutch.

In the above-described embodiment, the clutch 40 is provided at the shaft 36 while the clutch may be provided, for example, at the rotor shaft.

It will be appreciated that the embodiments of the present invention hereinbefore described are given by way of example only, and are not intended to limit the scope of the invention in any way.

It will be appreciated that the term straddled vehicle or electric motor vehicle used herein, and as used in the art, is meant to include at least the following terms also used in the art:
straddled vehicle or motor vehicle, straddle-type vehicle or motor vehicle, saddle-straddling type vehicle or motor vehicle, and includes: motorcycles and motorbikes as well as motor tricycles, quad bikes and All Terrain Vehicles (ATVs), scooters, mopeds and snowmobiles.

## Claims

1. A drive unit (22) for use in an electric straddled vehicle (10), the drive unit comprising:
a motor (32) having a rotor shaft (62);
a first gear (34) provided at the rotor shaft to rotate at the same speed as the rotor shaft;
a rotation shaft (36) provided in parallel with the rotor shaft;
a second gear (38) provided at the rotation shaft and meshing with the first gear; and
a bearing (48A,48B; 48B,48C) provided to support the rotation shaft in a rotatable manner and at least partly overlap the motor when viewed in an axial direction of the rotation shaft.

2. The drive unit according to claim 1, wherein at least a part of the rotation shaft overlaps the motor when viewed in the axial direction.

3. The drive unit according to either of claims 1 or 2, wherein the bearing comprises a first bearing (48A, 48B) provided closer to the second gear than to a stator of the motor in the axial direction.

4. The drive unit according to claim 3, wherein the bearing further comprises a second bearing (48B) provided closer to the second gear than to the first bearing in the axial direction.

5. The drive unit according to claim 3, wherein the bearing further comprises a second bearing (48C) provided more apart from the second gear than from the stator in the axial direction.

6. The drive unit according to any one of claims 1 to 5, further comprising a clutch (40) provided at an end of the rotation shaft positioned more apart from the stator of the motor than from the second gear in the axial direction, the clutch allowing/preventing transmission of driving force from the rotor shaft to the rotation shaft,
the clutch including an input portion which is provided more apart from the stator than from the rotation shaft in the axial direction and on which force operating the clutch acts.

7. An electric straddled vehicle (10) comprising a drive unit (22) according to any one of claims 1 to 6.
